# DEMANDE DE BREVET EUROPEEN

(11) **EP 2 540 684 A1**
(43) Date de publication de la demande: **02.01.2013**
(21) Numéro de dépôt: 11172043.9
(22) Date de dépôt: 30.06.2011
(51) Int. Cl.: C04B 2/10, C04B 28/18, E04C 1/40

(54) **Matière poreuse à base de silice et de portlandite pour le garnissage de briques d'isolation de structure contrôlée et procédé d'élaboration associé**

(71) Demandeur: L'AIR LIQUIDE, Société Anonyme pour l'Etude et l'Exploitation des Procédés Georges Claude, 75007 Paris (FR)
(72) Inventeur: Del-Gallo, Pascal, 91410 DOURDAN (FR); Cantonnet, Jérôme, 19100 BRIVE (FR)
(74) Mandataire: Beroud, Amandine

(57) **Abrégé**

Procédé de préparation d'une matière poreuse comprenant de 25% massique à 75% massique de silice, et de 75% massique à 25% massique d'hydroxyde de calcium comprenant les étapes successives suivantes :
- Une étape a) de synthèse de chaux vive,
- Une étape b) de mélange de ladite chaux vive obtenue à l'étape a), d'eau et de silice, dans un rapport molaire CaO/SiO₂ compris entre 0,8 et 1,2 et un rapport massique eau/(CaO + SiO₂) est compris entre 2 et 60,
- Une étape c) de synthèse hydrothermale sous une pression de vapeur d'eau saturante supérieure ou égale à 10⁵ Pa (1 bar) et inférieure ou égale à 3 x10⁵ Pa (3 bars), et à une température supérieure ou égale à 80°C et inférieure à 150°C.
- Une étape d) de séchage de ladite masse céramique obtenue à l'étape c), à une température comprise entre 100°C et 450°C. ;

Mise en oeuvre du procédé pour la fabrication de briques de constructions isolantes.

## Description

La présente invention a pour objet un nouveau procédé de préparation d'une structure poreuse silico-calcaire, ainsi que sa mise en oeuvre dans la production de briques de construction à haut pouvoir isolant.

Les briques en terre cuite, dites « monomur », ou en ciment, dites « parpaing », à structure alvéolaire, sont largement utilisées pour la construction de murs, de sols, de cloisons ou autres éléments de bâtiments.

Les alvéoles de ces briques qui sont habituellement vides, de tailles variables et de formes différentes, sont destinées à augmenter l'isolation thermique. Les espaces libres de ces alvéoles doivent cependant être de taille suffisamment réduite pour limiter la convection thermique et leurs parois d'épaisseur suffisamment faibles pour limiter l'effet de conduction. La résistance thermique induite par l'espace vide de ces alvéoles est cependant limitée par l'effet de convection de l'air en son sein. On peut alors limiter cet effet en produisant des briques ayant un plus grand nombre d'alvéoles ces dernières ayant de taille d'autant plus réduite, mais la production de telles briques est plus complexes l'avantage en résultant est souvent annulé par l'augmentation de l'effet de conduction du à la multiplication des parois desdites alvéoles.

La demande de brevet français publiée sous le numéro 2 521 197 A1, divulgue des briques en terre cuite avec des alvéoles remplies « d'un matériau cellulaire à haut pouvoir d'isolation thermique », comme « une mousse de polyuréthane, une mousse de polystyrène, ou tout autre matériaux fibreux (laine de verre ou de roche) ou divisé (agglomérat de liège) ». Cependant ces matériaux selon les cas :
(i) sont inflammables et/ou émettent des gaz toxiques en cas d'incendie,
(ii) sont des composés potentiellement dangereux car classifiables à terme dans la catégorie des FCR (Fibres Céramiques Réfractaires) nécessitant des conditions spécifiques de pose puis de gestion des déchets,
(iii) perdent des propriétés d'isolation au cours du temps (tassement du garnissage),
(iv) ou présentent plusieurs des inconvénients présentés ci-dessus.

De plus dans certains cas le garnissage des briques se fait sur place pendant le chantier, cela constitue une contrainte supplémentaire et nécessite de la main d'oeuvre supplémentaire.

La demande brevet français publiée sous le numéro 2 876 400 divulgue l'utilisation de briques creuses remplies « avec un matériau isolant à base de produit poreux en vrac ». La matière pour le garnissage est à base de perlite expansée ou de la vermiculite expansée dans laquelle on utilise l'amidon comme épaississant. Cette demande de brevet fait également mention de l'utilisation d'autres composants comme de la silice colloïdale, des agents hydrophobes, ou du plastique dispersé. L'inconvénient de cette solution réside dans la faible tenue mécanique des agglomérats, qui risquent de se détériorer pendant le transport et le montage des éléments. De plus la structure a faible pouvoir cohésif qui induit notamment des risques de perte de matière lors de perçage et de la découpe des murs. Le tassement des grains sur plusieurs années entraîne à terme la diminution du pouvoir isolant.

La demande de brevet français publiée sous le numéro 2 927 623 divulgue des éléments de construction de type brique en terre cuite, garnies d'une mousse de chaux. Cette matière poreuse est constituée d'un mélange chaux-ciment 65% à 90% de la matière sèche, de fibres, de charges minérales, d'un durcisseur et d'un agent moussant. Le principe est de faire prendre de la chaux avec un agent moussant pour créer des bulles d'air, de les emprisonner lors de la réaction et avoir ainsi une structure poreuse. L'inconvénient de cette solution réside dans la nécessité d'utiliser des produits chimiques de synthèse pour aider la chaux à durcir sous forme d'une matière poreuse. Parmi ces produits on peut citer les agents moussants, les gélifiants, les accélérateurs de prise, les durcisseurs. Il est difficile par ce procédé de contrôler la microstructure d'un tel matériau après synthèse, en particulier la taille et la distribution des pores, la porosité totale et le type d'empilements. Une telle structure a une tenue mécanique faible, ce qui limite la réduction du nombre de parois de la brique de terre cuite et entraîne des risques de dégradation de la matière poreuse pendant la pose des éléments de construction. Il est à noter aussi la présence de composés organiques (durcisseur, agent moussant, ..) dans le procédé qui peuvent accroître le risque de tenue au feu.

Les demandes internationales publiées sous les numéros WO 2010/000999 et WO 2010/00100 ainsi que la demande de brevet européen publiée sous le numéro EP 1 887 275, divulguent un procédé de préparation d'une structure poreuse silico-calcaire de bouteilles d'acétylène comprenant les étapes successives suivantes :
- une étape de synthèse de chaux vive par calcination à une température d'au moins 850°C pendant au moins une heure, de pavés de calcaire comprenant au moins 90% massique de carbonate de calcium, lesdits pavés ayant une porosité ouverte comprise entre 0% et 25% ;
- une étape de mélange de la chaux vive obtenue à l'étape précédente d'eau et de silice, qui peut être amorphe ou cristalline dans un rapport molaire CaO/SiO₂ compris entre 0,8 et 1 ; le ratio massique eau/(CaO +SiO₂) étant compris entre 2 et 60, de préférence entre 3 et 25, pour obtenir une crème desdits constituants ;
- une étape de synthèse hydrothermale de la masse de garnissage par chauffage de ladite crème préparée à l'étape précédente et préalablement introduite dans la bouteille à garnir, à une température comprise entre 150°C et 300°C sous une pression comprise entre 5.10⁵ Pa et 25.10⁵ Pa (5 et 25 bars) pendant une durée de 10 heures à 70 heures ;
- une étape de séchage pour éliminer l'eau résiduelle et conférer à la masse traitée une structure majoritairement cristalline à une température comprise entre 150 et 400°C pendant une durée de 5 à 48 heures.

Cependant ce procédé reste complexe, coûteux et n'est donc pas adapté aux lignes de production actuelle de briques, même s'il conduit à un matériau de faible conductivité thermique, dont la présence, du fait de sa microstructure, permet de minimiser les effets de convection en :
(i) ayant une très forte porosité totale, généralement supérieure à 70% et préférentiellement à 85%,
(ii) ayant une distribution de taille supérieure ou égale à 0,4µm et inférieure ou égale à 1µm, et
(iii) présentant une résistance à la compression supérieure à 5 MPa (5 kg/cm²),

Les inventeurs ont donc développé un nouveau procédé qui n'ait les inconvénients exposés ci-dessus.

Selon un premier aspect, l'invention a pour objet un procédé de préparation d'une matière poreuse comprenant de 25% massique à 75% massique de silice, et de 25% à 50% d'hydroxyde de calcium, comprenant les étapes successives suivantes :
- Une étape a) de synthèse de chaux vive, par calcination à une température supérieure ou égale à 850°C de pavés de calcaire taille moyenne comprise entre 1 mm et 15 mm, ayant une pureté d'au moins 90% en poids et une porosité ouverte supérieure à 0% à inférieure ou égale à 25%, pour obtenir des particules de chaux vive ;
- Une étape b) de mélange de ladite chaux vive obtenue à l'étape a), d'eau et de silice, dans un rapport molaire CaO/SiO₂ compris entre 0,8 et 1,2 et un rapport massique eau/(CaO +SiO₂) est compris entre 2 et 60, de préférence entre 3 et 25; pour obtenir une crème desdits constituants ;
- Une étape c) de synthèse hydrothermale par chauffage de ladite crème préparée à l'étape b) sous une pression de vapeur d'eau saturante supérieure ou égale à 10⁵ Pa et inférieure ou égale à 25.10⁵ Pa, pour obtenir une masse céramique, et
- Une étape d) de séchage de ladite masse céramique obtenue à l'étape c), à une température comprise entre 100 à 450°C ;
ledit procédé étant caractérisé en ce qu'en son étape c), la température de réaction est supérieure ou égale à 80°C et inférieure à 150°C.

Dans le procédé tel que défini ci-dessus, les pavés de calcaire mis en oeuvre à l'étape a) sont de taille moyenne comprise entre 1 mm et 15 mm, de préférence comprise entre 1 mm et 12 mm. Il a été déterminé que ces valeurs leur permettaient d'être calcinés à coeur dans des conditions relativement simples et d'obtenir, après calcination, une chaux vice de granulométrie comprise entre 0,1 mm et 15 mm, garantissant à celle-ci une bonne réactivité lors de l'ajout d'eau dans la mise en oeuvre de la seconde étape du procédé (réactivité mesurée conformément à la norme NF EN 459-2), sans risque excessif d'hydratation et/ou carbonatation qui pourrait résulter du mode de stockage de la chaux après calcination et qui, *in fine,* pourrait affecter la qualité de la structure poreuse silico-calcaire.

Les pavés de calcaire mis en oeuvre à l'étape a) du procédé tel que défini ci-dessus peuvent être obtenus par concassage de blocs de calcaire de plus grandes dimensions et tamisage subséquent.

Ils ont une pureté (teneur en CaCO₃ par rapport au poids total de calcaire) d'au moins 90% en poids et de préférence d'au moins 95% en poids, voire d'au moins 97% en poids, qui limite la présence d'impuretés susceptibles d'affecter la synthèse hydrothermale à partir des précurseurs des structures cristallines décrites précédemment.

Le calcaire utilisé selon le procédé de l'invention renferme ainsi de préférence moins de 6% en poids de carbonate de magnésium et de silice et moins de 1% en poids d'alumine, d'oxyde de fer, d'oxyde de manganèse, d'autres oxydes, notamment de potassium, sodium, titane et d'impuretés telles que le soufre ou le phosphore.

Enfin, la porosité ouverte du calcaire, mesurée par porosimétrie au mercure, est supérieure à 0% à inférieure ou égale à 25% et de préférence comprise entre 5 et 25%, de façon à ce que le dioxyde de carbone puisse s'échapper aisément lors de la formation de la chaux pendant le déroulement la réaction chimique :

CaCO₃ ------------> CaO + CO₂

et que la chaux vive formée ne soit pas densifiée durant cette réaction ; et puisse aisément absorber l'eau pour former le lait de chaux très rapidement à savoir en moins d'une dizaine de secondes lors de la mise en oeuvre de l'étape b) du procédé tel que défini ci-dessus.

Lors de la mise en oeuvre de l'étape a) du procédé tel que défini ci-dessus, il a notamment été observé que, pour un temps de palier fixé à deux heures, la température ne devait pas être inférieure à 800°C ni supérieure à 1100°C. En outre, dans le cas où la température de calcination est fixée à 1100°C, le temps de palier ne devra pas être substantiellement supérieur à une heure. On comprend donc que l'homme du métier pourra ajuster la température et la durée de cuisson du calcaire dans une certaine mesure, pour autant que la température soit supérieure à 850°C pendant au moins une heure. Un ajustement pourra en effet être rendu nécessaire en fonction du type particulier de four, de la quantité de calcaire traitée et de la disposition (telle que l'épaisseur de couches) du produit dans le four. Une température d'environ 900°C pendant environ trois heures est préférée. A cette température, en effet, il a été observé que la cinétique de frittage était relativement lente et que le temps de palier n'avait qu'un faible impact sur la réactivité. La cuisson à cette température permet donc d'ajuster la durée de calcination aux contraintes industrielles.

L'étape a) du procédé selon l'invention permet ainsi d'obtenir une chaux vive ayant une réactivité satisfaisante et apte à former, après synthèse hydrothermale, la phase cristalline recherchée. De préférence, la chaux vive obtenue présente une teneur totale en eau et dioxyde de carbone inférieure à 2% en poids.

Dans l'étape b) du procédé selon l'invention, la chaux vive obtenue à l'issue de l'étape a) est mélangée à de la silice. Celle-ci peut être amorphe ou cristalline ; elle est de préférence comprend au moins 90% massique de SiO₂ ; elle renferme de préférence au moins 90% massique de particules de taille moyenne inférieures à 1 µm, de façon à ce que sa réactivité avec la chaux soit la plus grande possible. Des silices de ce type sont couramment disponibles dans le commerce.

La chaux et la silice sont plus particulièrement mélangées l'une à l'autre dans un rapport molaire CaO:SiO₂ égal à 1. En outre, le rapport massique eau/précurseurs solides (chaux + silice) est plus particulièrement supérieur ou égal à 3 et inférieur ou égal à 10.

Selon un aspect particulier du procédé tel que défini ci-dessus, on ajoute dans l'étape b) des fibres choisies notamment parmi les fibres synthétiques à base de carbone tels que celles décrites dans le document US-A-3454,362, de fibres de verre alcalino-résistantes, telles que celles décrites dans le document US-A-4,349,643 ou des fibres de cellulose telles que celles décrites dans le document EP-A-262301.

Selon cette option, la quantité de fibres présente est inférieure ou égale à 20% massique, et de préférence, inférieure ou égale à 10% massique de l'ensemble des précurseurs solides mis en oeuvre à l'étape b).

L'invention a plus particulièrement pour objet le procédé tel que défini précédemment, dans lequel à l'étape b), aucune fibre n'est ajoutée.

Selon un autre aspect particulier du procédé tel que défini précédemment, lors de l'étape b), on ajoute un ou plusieurs agents dispersants et/ou des liants, tels que tels que les dérivés de cellulose, en particulier la carboxyméthyl cellulose, l'hydroxypropyl cellulose ou l'éthylhydroxyéthyl cellulose, des polyéthers, tels que le polyéthylène glycol, des argiles synthétiques de type smectite, de la silice amorphe de surface spécifique avantageusement comprise entre 1 et 300 m²/g, et leurs mélanges, et/ou un ou plusieurs lubrifiants tel qu'un poly(oxyéthylène).

La structure poreuse silico-calcaire peut de façon facultative inclure des agents dispersants et/ou des liants, tels que les dérivés de cellulose, en particulier la carboxyméthylcellulose, l'hydroxypropylcellulose ou l'éthylhydroxyéthylcellulose, des polyéthers, tels que le polyéthylène glycol, des argiles synthétiques de type smectite, de la silice amorphe de surface spécifique avantageusement comprise entre 1 et 300 m²/g, et leurs mélanges, sans que cette liste ne soit limitative.

Lors de l'étape c) procédé tel que défini précédemment, la crème issue de l'étape b) est chauffée pendant une durée comprise généralement entre 1h à 40h. Selon un aspect particulier du procédé tel que défini précédemment, en son étape c), la température de réaction est supérieure ou égale à 100°C et plus particulièrement inférieure ou égale à 130°C. Selon un autre aspect particulier, l'étape c) du procédé tel que défini précédemment est mise en oeuvre à une pression de vapeur saturante inférieure ou égale à 5x10⁵Pa (5 bars) préférentiellement inférieure ou égale à 3x10⁵ Pa (3 bars).

Lors de l'étape d) du procédé tel que défini précédemment, la durée du séchage est généralement comprise entre 1 heure et 48 heures et elle est généralement réalisée à la pression atmosphérique. Cette étape a plus particulièrement pour fonction non seulement d'évacuer l'eau résiduelle, mais aussi de conférer à la masse traitée une structure cristalline. La mise en oeuvre de cette étape est réalisée dans un four traditionnel électrique ou à gaz ; il peut ou non être le même que celui utilisé pour l'étape c). Selon un aspect particulier du procédé tel que défini précédemment, en son étape d), la température de séchage est supérieure ou égale à 100°C et inférieure ou égale à 150°C.

La matière poreuse obtenue par le procédé tel que défini précédemment comprend principalement de 25% massique à 75% massique de silice, et de 25% à 75% d'hydroxyde de calcium. Elle peut comprendre aussi, à l'état de traces, des phases issues du binaire CaO-SiO₂ principalement des phases silico-calcaires de type SiₓCa_{y}C_{z}(OH)_{w}, i(H₂O.),

L'invention a aussi pour objet une variante du procédé tel que défini précédemment, caractérisée en ce qu'elle comprend une étape b1) au cours de laquelle tout ou partie des alvéoles d'au moins une brique de construction à structure alvéolaire, et plus particulièrement une brique en terre cuite, est partiellement ou complètement remplie avec ladite crème préparée à l'étape b), et en ce que ladite brique de construction à structure alvéolaire ayant subie ladite étape b1), est ensuite soumise aux étapes c) puis d).

Selon un aspect particulier de cette variante de procédé telle que définie ci-dessus, ladite brique de construction à structure alvéolaire est préalablement mouillée à l'eau avant la mise oeuvre de l'étape b1).

Selon cet aspect particulier, ladite brique de construction est plus particulièrement immergée dans un bac rempli d'eau et laissée suffisamment longtemps pour qu'elle soit gorgée d'eau.

Selon un autre aspect particulier de la variante de procédé telle que définie ci-dessus, au moins 50% des alvéoles de ladite brique de construction à structure alvéolaire, sont partiellement ou complètement remplies avec ladite crème préparée à l'étape b).

Selon un autre aspect particulier de la variante de procédé telle que définie ci-dessus, par partiellement remplie, on signifie qu'une alvéole est remplie à au moins 50% de son volume interne avec ladite crème préparée à l'étape b).

Selon un aspect tout particulier de la variante de procédé telle que définie ci-dessus, toute les alvéoles de ladite brique de construction à structure alvéolaire, sont remplies à au moins 50% de leur volume interne avec ladite crème préparée à l'étape b).

Selon un autre aspect tout particulier de la variante de procédé telle que définie ci-dessus, toute les alvéoles de ladite brique de construction à structure alvéolaire, sont complètement remplies avec ladite crème préparée à l'étape b).

L'invention a aussi pour objet une brique de construction à structure alvéolaire , et plus particulièrement une brique en terre cuite ou en ciment comprenant une matière poreuse caractérisée la dite matière poreuse est obtenue par le procédé tel que défini précédemment, ainsi qu'une brique de construction à structure alvéolaire, et plus particulièrement une brique en terre cuite ou en ciment comprenant une matière poreuse caractérisée en que ladite brique est obtenue par la variante du procédé telle que définie précédemment.

L'invention a aussi pour objet l'utilisation d'une matière poreuse obtenue par le procédé tel que défini précédemment, comme agent d'isolation thermique, au sein d'une brique de construction à structure alvéolaire et plus particulièrement au sein d'une brique. en terre cuite ou en ciment.

L'invention a aussi pour objet un procédé pour améliorer les performances d'isolation thermique d'une brique de construction à structure alvéolaire et plus particulièrement d'une brique en terre cuite ou en ciment, caractérisé en ce que l'on remplit partiellement ou complètement, toute ou partie des alvéoles de ladite brique de construction à structure alvéolaire, avec ladite crème préparée à l'étape b).

Selon un aspect particulier de ce procédé, on remplit à au moins 50% de leur volume interne, toutes les alvéoles de ladite brique de construction à structure alvéolaire.

L'invention a enfin pour objet une matière poreuse comprenant de 25% massique à 75% massique de silice, et de 75% massique à 25% massique d'hydroxyde de calcium, caractérisée en ce qu'elle est obtenue par le procédé tel que défini précédemment.

La matière poreuse obtenue par le procédé selon l'invention se caractérise en ce qu'elle est un mélange de silice (SiO₂) et de portlandite (Ca(OH)₂) agglomérées, dans lequel on peut également trouver des phases issues du binaire CaO-SiO₂ principalement des phases silico-calcaires de type SiₓCa_{y}O₂(OH)_{w}, i(H₂O). Elle comprend de 25% à 75% de silice (SiO₂) et de 25 à 75% de portlandite (Ca(OH)₂).

La porosité globale résultante de ce matériau est alors importante et se situe entre généralement entre 70% et 95 %, préférentiellement entre 80% et 90%. Cette porosité importante couplée à une distribution (système bimodale centré autour de 0,01µm - 0,2µm et 0,5µm à 1µm) et à des tailles de pores contrôlées (<5µm, préférentiellement <1µm) permet aux matériaux limiter les phénomènes de convection de l'air dans l'alvéole et donc de présenter un coefficient de conductivité très faible.

Les matériaux silico-calcaires élaborés doivent avoir une porosité suffisante et une distribution et des tailles de pores adéquats pour diminuer le phénomène de conduction thermique. Ils doivent également présenter une bonne résistance mécanique, conséquence de la morphologie et de l'empilement des cristallites. Ces matériaux sont classiquement constitués de masses céramiques silico-calciques poreuses, obtenues par exemple à partir d'un mélange homogène dans l'eau (H₂O), de chaux vive (CaO) ou de lait de chaux (Ca(OH)₂) et de silice (SiO₂, notamment sous forme de farine de quartz).

Plus précisément, les inventeurs ont maintenant montré que les inconvénients de l'art antérieur pouvaient être surmontés en utilisant une structure poreuse silico-calcaire de brique se présentant sous la forme de phases cristallines présentes dans des proportions particulières. Dans la structure poreuse silico-calcaire selon l'invention, ces deux phases cristallines se présentent sous la forme d'arrangements cristallisés et aggloméré entre eux. Cet agglomérat est composé de nodules plus ou moins sphériques arrangés les uns contre les autres. A l'intérieur de ces nodules, on retrouve les deux phases cristallines mélangées avec la silice sous forme de grains et la portlandite sous forme d'aiguilles aciculaires de petite taille. C'est cet empilement microstructural particulier qui confère aux matériaux une distribution de pores bi-modale avec un d₉₀<1µm et une porosité supérieure à 80% qui permettent de quasiment supprimer tout effet de convection de l'air (« emprisonnement de l'air ») dans les alvéoles « garnies » des briques.

La structure poreuse silico-calcaire selon l'invention a de préférence une résistance à la compression supérieure ou égale à 5 kg/cm², soit 5 MPa, plus préférentiellement supérieure à 20 kg/cm², soit 20 MPa. La résistance mécanique à la compression peut être mesurée par l'élaboration d'un cube de 100 x 100 mm² de matière poreuse et application sur la face supérieure de celui-ci d'une force en pression tandis qu'elle est maintenue contre une plaque métallique horizontale. Cette force correspond à la pression (en kg/cm² ou MPa) à partir de laquelle la matière commence à se fissurer.

La matière poreuse obtenue par le procédé objet la présente invention, présente une conductivité thermique globale d'environ 0,05 W/m/°K., se situant de façon plus large entre 0,01 à 0,10 W/m/°K.

La présente invention permet de surmonter ces inconvénients de l'art antérieur en préparant une matière poreuse inorganique à base CaO-SiO₂ de structure contrôlée avec son procédé d'élaboration associé dont les propriétés microstructurales (taille(s) et distribution de la taille des pores de type micro et méso poreux, porosité totale, structure de l'empilement, contacts parois des briques - matière poreuse) et la composition chimique qui lui confèrent, en particulier, une conductivité thermique (λ) faible à 25°C, généralement inférieure à 100mW/°C.m et préférentiellement inférieure à 70mW/°C.m.

### EXEMPLES

### Préparation d'une matière poreuse selon l'invention

### Etape a) : Calcination du calcaire

Un calcaire ayant les caractéristiques suivantes a été utilisé :
Composition (massique) :
97,50% CaCO₃, 1,00 % MgCO₃, 0,8% SiO₂, 0,16% Al₂O₃, 0,5% Fe₂O₃
Granulométrie : 5 à 10 mm
Porosité : 18,9%
D50 : 0,93 µm

Environ 40 kg de ce calcaire ont été étalés sur quatre soles supportant chacune 10 kg de ce produit, sur une épaisseur de 3 cm, puis calcinés dans un four électrique sous atmosphère d'air sec, réglé à une vitesse de montée en température de 5°C/min jusqu'à 900°C puis maintenu 5h à cette température. La ventilation a été activée pendant la montée en température et le palier, puis coupée au refroidissement, qui était de type non forcé. La chaux produite répond à une réactivité mesurée conformément à la norme NF EN 459-2, à savoir une extinction du produit à 60°C après ajout de l'eau en moins de 10 s puis une température maximale du lait de chaux comprise entre 70 et 82°C.

### Etape b) : Préparation de la crème

La chaux vive obtenue à l'étape a) a été éteinte à l'aide d'eau chaude (43°C), puis mélangée dans de l'eau à 20°C avec divers adjuvants, pour obtenir une crème ayant la composition indiquée dans le Tableau 1 ci-dessous.

**Tableau 1 : Composition de la crème**

| Constituant | Quantité |
|---|---|
| CaO | 172 g |
| SiO₂ | 180 g |
| Eau | 1258 g |

Cette crème est après garnissage dans les alvéoles de briques soit synthétisée sous conditions hydrothermales douces (température comprise entre 100-120°C, pression de vapeur saturante comprise entre 0,1 et 2 bars relatif), soit sous conditions de synthèse hydrothermales plus sévères (température comprise entre 120°C et inférieure à 150°C, pression de vapeur saturante comprise entre 1 et 7 bars relatifs). Le premier mode sera dit synthèse hydrothermale en mode simplifié basse température (100°C à 120°C, 0,1 à 2 bars relatif)), le second sera dit synthèse hydrothermale en mode simplifié moyenne température (de 130°C à inférieure à 150°C, 1 à 7 bars relatifs). La conséquence comme illustrée dans les deux exemples ci-dessous sera :
- Pour le mode simplifié basse pression (0,1 à 1 bar relatif) et basse température (100 à 120°C) selon l'invention, la présence principalement de silice et de portlandite avec une microstructure contrôlée ; peu de phases silico-calcaires semblent présentes ;
- Pour le mode simplifié moyenne pression (1 à 7 bars relatifs) et moyenne température (de 120°C à inférieure à 150°C) selon l'invention, la présence conjointe de silice, de portlandite et de phases silico-calcaires. Les phases silico-calcaire sont principalement du type CaₓSi_{y}O_{z}(OH)ᵢ., jH₂O, comme la xonolithe, la foshagite, la tobermorite 11A, la tobermorite 9A, la Riversideite 9Å, la Trabzonite [Ca₄Si₃O₁₀, 2H₂O], la Rosenhahnite [Ca₃Si₃O₈(OH)₂], la Kilalaite [Ca₆Si₄O₁₄, H₂O], ou la Gyrolite.
- Pour le mode standard pression élevée (10 à 25 bars) et température élevée (160° à 210°C) selon l'état de la technique, la présence très majoritaire de phases silico-calcaire et en particulier de xonolithe.

### Etape c) : Synthèse hydrothermale en mode simplifié basse température (de 100°C à 120°C)

La crème obtenue à l'étape b a été injectée dans les alvéoles d'une brique de dimension 12x40x40 275x200x565 mm, en veillant à ce que d'éventuelles bulles au sein de la pâtée soient évacuées. Une fois remplie, la brique est placée dans un autoclave, puis placée dans un four où elle est chauffée à une température de consigne de 120°C et pendant 40 heures, sous une pression égale à la pression de vapeur saturante à la température donnée soit 1 à 2 bars relatifs.

### Etape d) : Séchage

La brique a ensuite été séchée dans un second four après l'avoir sortie de l'autoclave, à une température de consigne de 100°C et pendant une durée suffisante de 24 h, à pression atmosphérique.

### Résultats

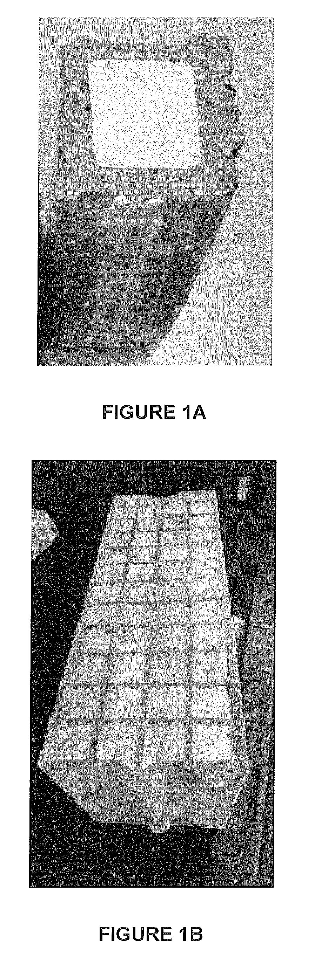

**Les** **Figures 1A et 1B** sont des photographies d'une section d'une alvéole de brique d'isolation ainsi que d'une brique entière de la construction, remplies d'une matière poreuse selon l'invention.

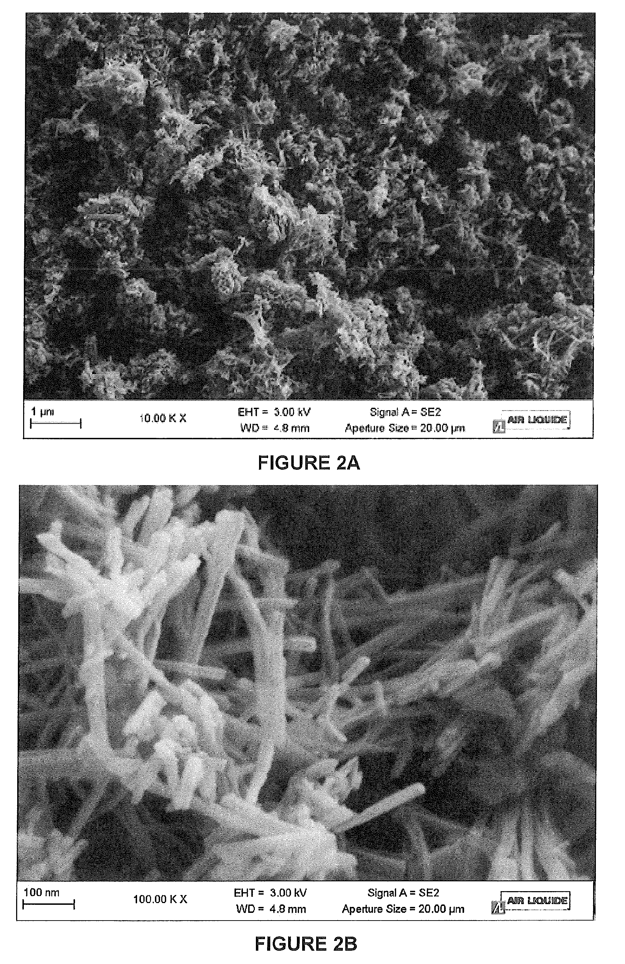

**Les** **Figures 2A et 2B** sont des photographies prises au microscopie électronique (deux grossissements différents). Elles font apparaître la microstructure de la masse poreuse obtenue selon le procédé objet de la présente invention. Elles permettent de mettre en évidence des nodules de fibres de petite taille (longueur <500nm) induisant la méso porosité (pores < 0,2µm), l'empilement de ces nodules (germes) induisant ensuite une micro porosité (de l'ordre de 0,7µm à 0,9µm).

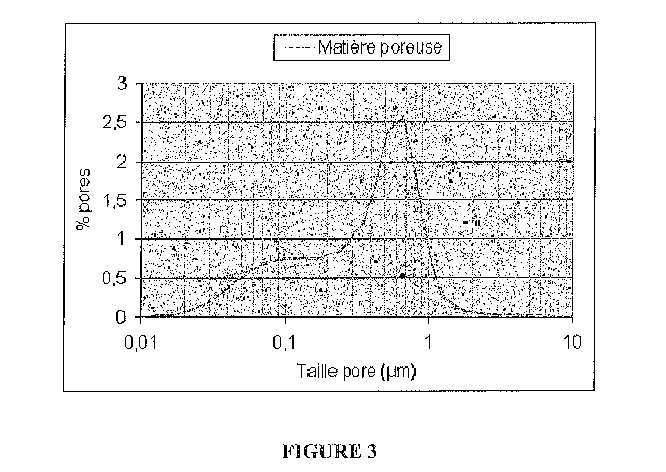

On observe ainsi une porosité totale de l'ordre de 85% à 80% avec des aiguilles enchevêtrées de taille (longueur, épaisseur, largeur) diverses induisant une distribution de taille (d90) de pore inférieure à 1µm comme illustrée par la **Figure 3****.** On observe aussi que le système est principalement bimodale constitué de pores de l'ordre de 0,05 µm à 0,2µm et de 0,6 µm à 0,8 µm. Les analyses microscopiques (figure 2) confirment cette distribution de taille de pores.

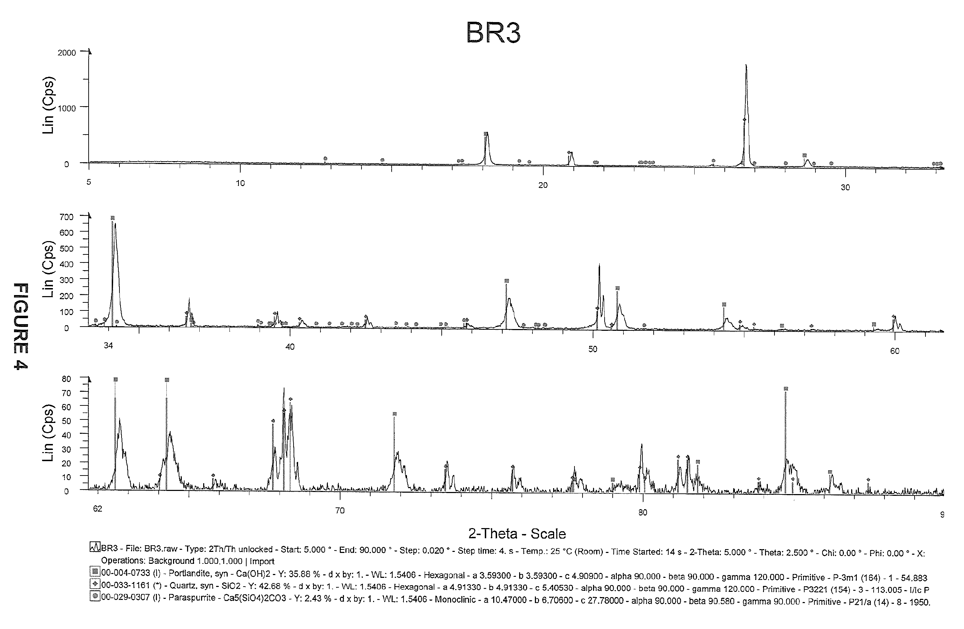

Les analyses DRX (**Figure 4**) de cette matière poreuse donne une composition de phase constituée à 50% de SiO₂ et 50% de Ca(OH)₂. Il est à noté la présence de traces de composés silico-calcaires difficilement identifiables par DRX (phases du type Caₓsi_{y}O_{z}(OH)ₗ, ⱼH₂O).

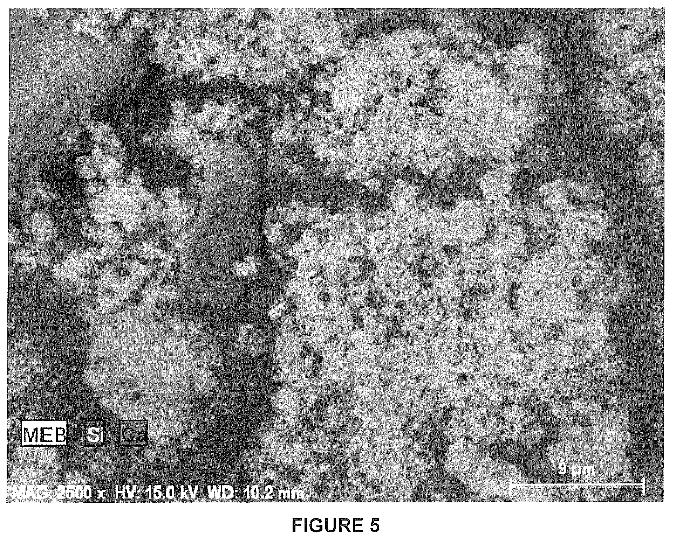

La cartographie EDS (**Figure 5**) confirme cette répartition et met en évidence les présences de grains de silice de taille micronique non réagis et la portlandite se caractérisant par enchevêtrement de germes porteurs d'aiguilles aciculaires.

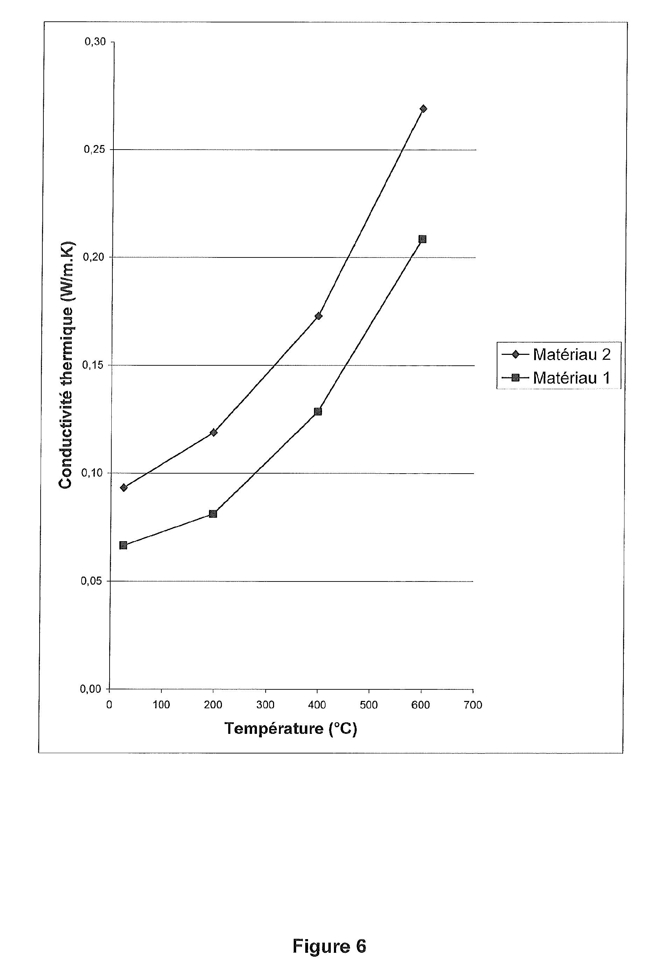

La **Figure 6** met en évidence les propriétés de conductivité thermique de la masse poreuse préparée par le procédé selon l'invention (Matériau 1). A titre de comparaison, on a mesuré la conductivité thermique d'une masse poreuse (Matériau 2) utilisée pour le garnissage des bouteilles d'acétylènes et préparée par le procédé décrit dans demande de brevet européen EP 1 887 275.

| Température moyenne (en °C) | Conductivité thermique (en W/m.K) | | |
|---|---|---|---|
| | Matériau 2 | Matériau 1 | Ecart |
| 25 | 0,093 | 0,067 | -28% |
| 197 | 0,119 | 0,081 | -32% |
| 398 | 0,173 | 0,129 | -25% |
| 597 | 0,269 | 0,209 | -22% |

Les différences entre les deux produits, résultant de la différence entre le procédé selon l'invention et le procédé selon l'état de la technique, sont les suivantes :
(i) une microstructure différente
   - Monomodale dans le cas du matériau 2 comprise entre 0,5 µm et 0,8µm ;
   - Bi modale dans le cas su matériau 1 ;
(ii) une porosité totale du même ordre : 82% à 85% dans les deux cas ;
(iii) des phases cristallines différentes :
   - De la xonolithe Ca₆Si₆O₁₇, iH₂O dans le cas du matériau 2 ;
   - Un mélange de silice (SiO₂) et de portlandite (Ca(OH)₂) agglomérées, au sein du quel dans lequel on peut également trouver à l'état de traces, des phases issues du binaire CaO-SiO₂ principalement des phases silico-calcaires de type SiₓCa_{y}O₂(OH)_{w}, i(H₂O) dans le cas du matériau 1).

Cette différence de microstructure induit une conductivité thermique plus basse pour le matériau 1, pour des températures comprises entre 25 et 600°C des valeurs 20-30% inférieures à celle du matériau 2.

### Etape c') : Synthèse hydrothermale en mode simplifié moyenne température (de 130°C à inférieure à 150°C)

La crème obtenue à l'étape b) a été injectée dans les alvéoles d'une brique de dimension 12x40x40 275x200x565 mm, en veillant à ce que d'éventuelles bulles au sein de la pâtée soient évacuées. Une fois remplies, la brique est placée dans un autoclave, puis placées dans un four elle est chauffée à une température de consigne de 130°C à 150°C et pendant 40 heures, sous une pression égale à la pression de vapeur saturante à la température donnée soit 4 à 6 bars relatifs.

### Etape d') : Séchage

La brique a ensuite été séchée dans un second four après l'avoir sortie de l'autoclave, à une température de consigne de 100°C et pendant 24 heures, à pression atmosphérique.

### Résultats

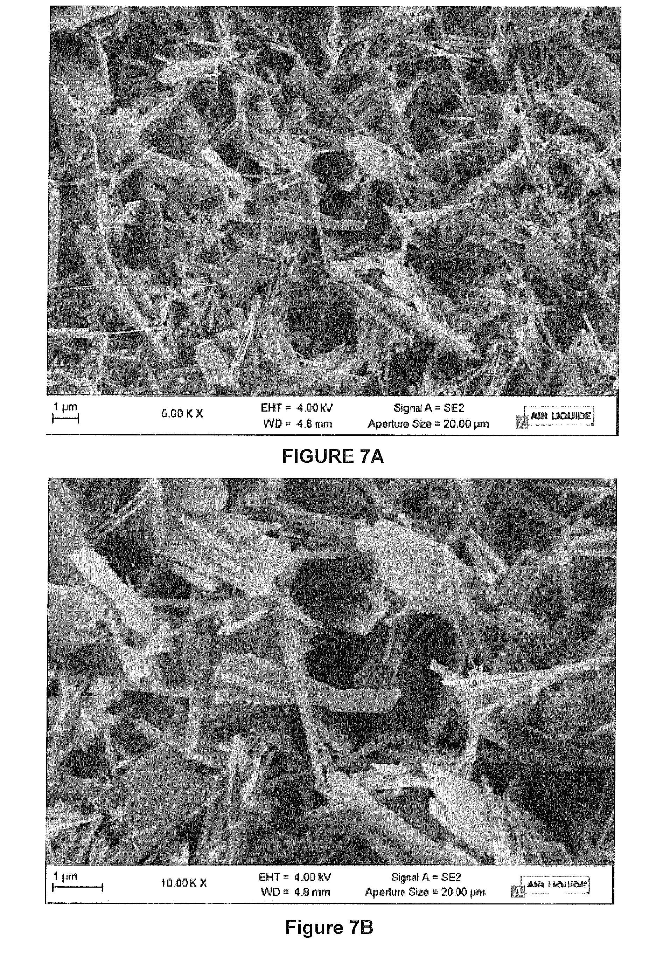

**Les** **Figures 7A et 7B** sont deux photos prises au microscopie électronique (deux grossissements différents) de la masse poreuse obtenue après séchage. On observe une structure formée de plaquettes de 0,05 µm à 2 µm d'épaisseur et de 0,5 µm à 3 µm de large. Ces plaquettes enchevêtrées les unes aux autres, forment une structure poreuse.

## Revendications

1. Procédé de préparation d'une matière poreuse comprenant de 25% massique à 75% massique de silice, et de 75% massique à 25% massique d'hydroxyde de calcium, comprenant les étapes successives suivantes :
- Une étape a) de synthèse de chaux vive, par calcination à une température supérieure ou égale à 800°C de pavés de calcaire taille moyenne comprise entre 1 mm et 15 mm ayant une pureté d'au moins 90% en poids et une porosité ouverte supérieure à 0% à inférieure ou égale à 25%, pour obtenir des particules de chaux vive ;
- Une étape b) de mélange de ladite chaux vive obtenue à l'étape a), d'eau et de silice, dans un rapport molaire CaO/SiO₂ compris entre 0,8 et 1,2 et un rapport massique eau/(CaO + SiO₂) est compris entre 2 et 60, de préférence entre 3 et 25; pour obtenir une crème desdits constituants ;
- Une étape c) de synthèse hydrothermique par chauffage de ladite crème préparée à l'étape b) sous une pression de vapeur d'eau saturante supérieure ou égale à 10⁵ Pa et inférieure ou égale à 25x10⁵ Pa, pour obtenir une masse céramique, et
- Une étape d) de séchage de ladite masse céramique obtenue à l'étape c), à une température comprise entre 100°C et 450°C ;
ledit procédé étant **caractérisé en ce qu'**en son étape c), la température de réaction est supérieure ou égale à 80°C et inférieure à 150°C.

2. Procédé tel que défini à la revendication 1 **caractérisé en ce qu'**en son étape b), le rapport massique eau/(CaO + SiO₂) est supérieur à 3 et inférieur ou égal à 10.

3. Procédé tel que défini à l'une quelconque des revendications 1 ou 2, **caractérisé en ce qu'**en son étape c), la température de réaction est supérieure ou égale à 100°C.

4. Procédé tel que défini à la revendication 3, **caractérisé en ce qu'**en son étape c), la température de réaction est inférieure ou égale à 130°C.

5. Procédé tel que défini à l'une quelconque des revendications 1 à 4, **caractérisé en ce qu'**en son étape c), la pression de vapeur saturante est inférieure ou égale à 3x10⁵ Pa.

6. Variante du procédé tel que défini à l'une quelconque des revendications 1 à 5, **caractérisée en ce qu'**elle comprend une étape b1) au cours de laquelle tout ou partie des alvéoles d'au moins une brique de construction à structure alvéolaire est partiellement ou complètement remplie avec ladite crème préparée à l'étape b), et **en ce que** ladite brique de construction à structure alvéolaire ayant subie ladite étape b1), est ensuite soumise aux étapes c) puis d).

7. Variante du procédé telle que définie à la revendication 6, dans laquelle ladite brique de construction à structure alvéolaire, est une brique en terre cuite.

8. Variante du procédé telle que définie à l'une des revendications 6 ou 7, dans laquelle ladite brique de construction à structure alvéolaire est préalablement mouillée à l'eau avant la mise oeuvre de l'étape b1).

9. Variante du procédé telle que définie à l'une des revendications 6 à 8, **caractérisée en ce que** toute les alvéoles de ladite brique de construction à structure alvéolaire, sont remplies remplie à au moins 50% de leur volume interne avec ladite crème préparée à l'étape b).

10. Brique de construction à structure alvéolaire, et plus particulièrement une brique en terre cuite ou en ciment comprenant une matière poreuse **caractérisée en ce que** ladite matière poreuse est obtenue par le procédé tel que défini à l'une quelconque des revendications 1 à 5.

11. Brique de construction à structure alvéolaire, et plus particulièrement une brique en terre cuite ou en ciment comprenant une matière poreuse caractérisée en que ladite brique est obtenue par la variante du procédé telle que définie à l'une quelconque des revendications 6 à 9.

12. Utilisation d'une matière poreuse obtenue par le procédé tel que défini à l'une quelconque des revendications 1 à 5, comme agent d'isolation thermique, au sein d'une brique de construction à structure alvéolaire et plus particulièrement au sein d'une brique en terre cuite ou en ciment .

13. Procédé pour améliorer les performances d'isolation thermique d'une brique de construction à structure alvéolaire et plus particulièrement d'une brique en terre cuite ou en ciment, **caractérisé en ce que** l'on remplit partiellement ou complètement, toute ou partie des alvéoles de ladite brique de construction à structure alvéolaire, avec ladite crème préparée à l'étape b) du procédé tel que défini à l'une quelconque des revendications 1 à 5.

14. Procédé tel que défini à la revendication 13, **caractérisé en ce que** l'on remplit à au moins 50% de leur volume interne, toutes les alvéoles de ladite brique de construction à structure alvéolaire.

15. Matière poreuse comprenant de 25% massique à 75% massique de silice, et de 75% massique à 25% massique d'hydroxyde de calcium, **caractérisée en ce qu'**elle est obtenue par le procédé tel que défini à l'une quelconque des revendications 1 à 5.
